# EUROPÄISCHE PATENTANMELDUNG

(11) **EP 1 149 930 A1**
(43) Veröffentlichungstag der Anmeldung: **31.10.2001**
(21) Anmeldenummer: 01110219.1
(22) Anmeldetag: 25.04.2001
(51) Int. Cl.: C23C 2/00

(54) **Verfahren und Anordnung zum Regenerieren einer verunreinigten Metallschmelze**

(30) Priorität: 26.04.2000 DE 10020284
(71) Anmelder: STOLBERGER METALLWERKE GMBH & CO. KG, D-52222 Stolberg (DE)
(72) Erfinder: Elbern, Klaus, 52080 Aachen (DE); Leffers, Robert, 41236 Mönchengladbach (DE); Rumbach, Albert, 52076 Aachen (DE)

(57) **Zusammenfassung**

Die Erfindung betrifft ein Verfahren und eine Anordnung zum Regenerieren einer durch Mischkristalle verunreinigten Metallschmelze, insbesondere einer Zinnschmelze (17), aus einem Schmelztauch-Beschichtungsprozeß. Ein Teilstrom der Zinnschmelze (17) wird aus dem Beschichtungsbecken (15) entnommen und zunächst in einer Heizeinheit (24) über ihre Liquidustemperatur erhitzt. Anschließend wird die Zinnschmelze (17) über eine Kühleinheit (27) geleitet und im Durchfluß durch einen Filter (29) von den sich infolge der Abkühlung ausfallenden Mischkristallen gereinigt. Der Filter (29) ist ein keramischer Schaumfilter aus Siliziumcarbid. Anschließend wird die regenerierte Zinnschmelze (17a) in einem Schmelzbecken auf Prozeßtemperatur erwärmt und von dort aus in das Beschichtungsbecken (15) zurückgeführt.

## Beschreibung

Die Erfindung betrifft ein Verfahren zum Regenerieren einer durch Mischkristalle verunreinigten Metallschmelze, insbesondere einer Zinnschmelze, aus einem Schmelztauch-Beschichtungsprozeß, bei welchem die Metallschmelze zunächst über ihre Liquidustemperatur erhitzt wird und anschließend die beim Erkalten ausfallenden Mischkristalle mechanisch entfernt werden. Ferner ist eine Anordnung zum Durchführen eines solchen Verfahrens Gegenstand der Erfindung.

Metallgegenstände werden meist aus Korrosions- und Verschleißschutzgründen oder zur Erzielung einer höheren Oberflächenhärte mit metallischen Überzügen versehen. Auch die Verbesserung der Gleiteigenschaften oder die Erzielung eines dekorativen Aussehens kann Ziel einer solchen Beschichtung sein. Vor allem bei Kupferwerkstoffen wird in vielen Gebrauchsfällen und industriellen Anwendungen, beispielsweise für die Herstellung von elektrischen Steckkontaktverbindungen eine metallisch reine Oberflächenbeschichtung verlangt.

Sehr weit verbreitet, insbesondere bei der Beschichtung von Metallbändern, ist das Schmelztauchverfahren, beispielsweise in Form einer Feuerverzinnung oder Feuerverzinkung. Hierbei wird ein Metallband mit Flußmittelsalzen durch ein Schmelzbad aus dem Überzugsmetall geleitet. Infolge von Diffusionsvorgängen zwischen den Metallatomen des flüssigen Überzugsmetalls und den Atomen des Grundmetalls wird eine Legierungsschicht gebildet. Nach dem Herausziehen des Metallbands aus dem Schmelzbad befindet sich auf diesem eine Schicht aus reinem Überzugsmetall. Die Schichtdicke der Auflage wird eingestellt entweder durch mechanisches Abstreifen oder durch Abblasen unter Zuhilfenahme von Luft oder Schutzgas.

Im Laufe des Beschichtungsprozesses verunreinigt eine Metallschmelze durch chemische Reaktion. Ursächlich hierfür ist insbesondere, daß im Schmelzbad Metallbzw. Legierungsbestandteile der eingetauchten Gegenstände gelöst werden. Auch durch Cracken von unverbrauchtem Flußmittel kommt es zu Verunreinigungen. Diese chemische Veränderung der Metallschmelze verschlechtert das Beschichtungsergebnis überwiegend durch die Veränderung der Konsistenz der Metallschmelze und damit ihres Benetzungsverhaltens. Die Schmelzbäder werden folglich mit zunehmender Nutzungsdauer unbrauchbar.

Durch Anheben der Betriebstemperatur der Metallschmelze kann die Nutzungsdauer verlängert werden. Allerdings führt diese Maßnahme zu einer Verstärkung des Lösungseffektes mit der Folge, daß die Verunreinigung der Metallschmelze schneller und stärker zunimmt.

Ist die maximal zulässige Konzentration an unerwünschten Bestandteilen erreicht, wird das Beschichtungsbecken aus der Linie herausgenommen und gereinigt. Dies geschieht diskontinuierlich. Hierzu wird die Metallschmelze zunächst auf eine Temperatur oberhalb ihrer Liquidustemperatur erhitzt. Oberhalb dieser Temperatur gehen alle Legierungsbestandteile in Lösung. Auch die in der Metallschmelze befindlichen Verunreinigungen, vorwiegend Mischkristalle aus Verbindungen des Grundmetalls und des Überzugsmetalls gehen wieder in Lösung. Anschließend werden Siebe aus Edelstahl in die Metallschmelze gedrückt. Solche Siebe haben üblicherweise eine Maschenweite von 5 mm. Man läßt die Metallschmelze dann konvektiv abkühlen, bis ihre Temperatur auf ein Niveau abgesunken ist, bei dem die Mischkristalle ausfallen. Nun werden die Siebe aus der Metallschmelze herausgezogen und die Mischkristalle dadurch mechanisch entfernt.

Dieser Vorgang wird mehrfach wiederholt, bis die gewünschte Regeneration der Metallschmelze eingetreten ist und die chemische Analyse die gewünschte Zusammensetzung der Metallschmelze bestätigt. Die Verunreinigungen aus der Metallschmelze verbleiben in den Sieben und werden anschließend meist thermisch mittels Brennern ausgebrannt und der Weiterverwertung zugeführt. Alternativ können Mischkristalle aus dem Beckensumpf mit Hilfe einer Lochkelle ausgelöffelt werden.

Oft muß der Trennvorgang bis zu zehnmal wiederholt werden, bis eine gewünschte Zusammensetzung der Metallschmelze erreicht ist. Folglich ist diese Vorgehensweise zur Regeneration der Metallschmelze zeit- und arbeitsintensiv.

Der Erfindung liegt daher ausgehend vom Stand der Technik die Aufgabe zugrunde, ein Verfahren und eine Anordnung zu schaffen, welche bei rationeller und wirtschaftlicher Arbeitsweise eine effiziente Regeneration einer durch Mischkristalle verunreinigten Metallschmelze ermöglichen.

Die Aufgabe wird verfahrensgemäß durch die Maßnahmen des Anspruchs 1 gelöst.

Kernpunkt der Erfindung bildet die Maßnahme, daß die Metallschmelze nach dem Erhitzen mindestens auf Liquidustemperatur oder eine Temperatur darüber über eine Kühleinheit geleitet und im Durchfluß durch wenigstens einen Filter geführt wird.

Durch die erfindungsgemäß vorgesehene Filterung der Metallschmelze kann eine unzulässige Verunreinigung des Schmelzbads vermieden und ein annähernd gleichbleibender Betriebszustand erreicht werden.

Das erfindungsgemäße Verfahren ist sowohl als kontinuierliche Regeneration parallel zum laufenden Verzinnungsprozeß als auch in diskontinuierlicher Arbeitsweise, das heißt außerhalb der Prozeßlinie durchführbar. Bei rationeller Arbeitsweise wird eine sehr effiziente Reinigung der Metallschmelze vorgenommen. Bereits nach Durchlauf eines Filtervorgangs hat die regenerierte Metallschmelze wieder Einsatzqualität. Selbstverständlich sind je nach den betrieblichen Anforderungen und Gegebenheiten auch mehrere Filtervorgänge möglich. Praktikabel ist eine Reihenschaltung mehrerer Filter hintereinander mit einer Extraktion der Mischkristallkonglomerate nach ihrer Größe. Ferner ist eine Parallelschaltung von Filtern und eine Aufteilung der zu regenerierenden Metallschmelze in Teilströmen möglich, womit eine Leistungssteigerung bei verkürzten Regenerationszeiten erreicht werden kann.

Vorzugsweise kommen keramische Filter, insbesondere Schaumfilter auf Siliziumcarbidbasis oder Aluminiumoxidfilter zum Einsatz, wie dies Anspruch 2 vorsieht. Diese Filtermedien erreichen bei auf die jeweilig zu regenerierende Metallschmelze abgestimmter Porosität einen sehr hohen Filtrationswirkungsgrad. Durch die große innere Oberfläche der Filterkörper werden auch kleinste Verunreinigungspartikel zurückgehalten. Neben Schaumkeramikfiltern aus Siliziumcarbid bietet sich für die Praxis auch ein Tiefbettfilter gefüllt mit Tabularaluminiumoxidkugeln an.

Die zu regenerierende Metallschmelze wird im kontinuierlichen Durchfluß über die Filter geführt. Nach dem Aufheizen des Filters steigt die Durchflußrate der Filter an, bis die Sättigung eintritt. Danach sinkt die Durchflußrate mit zunehmender Filterung langsam ab. Rechtzeitig vor einem unzulässigen Leistungsabfall werden die Filter ausgetauscht, so daß eine annähernd gleichbleibende Durchflußrate eingestellt werden kann. Ausgetauschte Filter können durch Temperaturzufuhr in geeigneter Höhe zum Mehrfachgebrauch regeneriert werden.

Eine direkt mit dem Schmelztauch-Beschichtungsprozeß gekoppelte Regeneration sieht Anspruch 3 vor. Danach wird Metallschmelze als Teilstrom während des Beschichtungsprozesses aus dem Beschichtungsbecken entnommen und auf dem Weg zu einem Schmelzbecken aufgeheizt, gekühlt und gefiltert. Im Schmelzbecken erfolgt dann eine Temperaturerhöhung der regenerierten Metallschmelze auf Einsatztemperatur, worauf die Metallschmelze aus dem Schmelzbecken wieder in das Beschichtungsbecken zurückgeführt wird. Dies ermöglicht eine kontinuierliche zeitparallele Regeneration der Metallschmelze im On-Line-Betrieb. Durch entsprechende Abstimmung der Betriebsparameter, insbesondere des Verhältnisses von regenerierter Metallschmelze zur Metallschmelze im Schmelzbecken kann ein gleichmäßiger Betriebszustand des Beschichtungsprozesses erreicht werden.

Das erfindungsgemäße Verfahren ist grundsätzlich gut geeignet für die Regeneration verschiedenartiger Metallschmelzen.

Besonders vorteilhaft ist das erfindungsgemäße Verfahren für die Regeneration von Zinnschmelzen geeignet, die dadurch charakterisiert sind, daß sie mehr als 50 % Zinn enthalten. Demgemäß sieht Anspruch 4 vor, daß die Zinnschmelze je nach Verunreinigungsgrad auf dem Weg zum Filter zunächst auf eine Temperatur zwischen 230°C und 350°C aufgeheizt wird. Dies ist der Temperaturbereich, bei dem die verunreinigenden Mischkristalle in Lösung gehen, wobei dieser Temperaturbereich auch Zinnlegierungsschmelzen, z.B. Zinn-Blei-Legierungen, berücksichtigt. Anschließend wird die Metallschmelze auf eine Temperatur zwischen 210°C und 250°C abgekühlt. Hierbei fallen die Mischkristalle aus, so daß diese beim Durchlauf im Filter zurückgehalten werden.

Der gegenständliche Teil der Aufgabe wird erfindungsgemäß durch eine Anordnung gemäß Anspruch 5 gelöst.

Danach ist eine Pumpe vorgesehen, welche die Metallschmelze aus einem Schmelzbzw. Beschichtungsbecken zur Kühleinheit und dem dieser nachgeschalteten Filter fördert. In der Praxis ist diese Anordnung besonders für die Regeneration von Zinnschmelzen geeignet.

Gemäß Anspruch 6 ist der Kühleinheit eine separat betriebene Heizeinheit vorgeschaltet. In der Heizeinheit wird die Metallschmelze vorzugsweise im Durchlauf bis zu ihrer Liquidustemperatur bzw. darüber erhöht.

Nach den Merkmalen des Anspruchs 7 ist vorgesehen, daß Abwärme aus dem Beschichtungsprozeß zum Aufheizen der Metallschmelze genutzt wird.

Auch wenn grundsätzlich verschiedene Filter für die Trennung der Verunreinigungen zum Einsatz gelangen können, werden, wie bereits erwähnt, keramische Schaumfilter aus Siliziumkarbid oder Aluminiumoxid bevorzugt (Anspruch 8).

Die Schaumfilter werden entsprechend der geforderten Filtereigenschaft in Abhängigkeit von der zu regenerierenden Metallschmelze nach ihrer Porosität ausgewählt. In Reihe können auch Filter mit unterschiedlicher Porosität hintereinander geschaltet sein. Vorteilhaft sind die keramischen Schaumfilter auch deshalb, weil sie gut zu reinigen sind.

Eine für die Praxis vorteilhafte Ausgestaltung der Kühleinheit ist in Anspruch 9 charakterisiert. Danach ist die Kühleinheit als Gefällestrecke ausgebildet. Die Gefällestrecke ist mit Thermoelementen ausgestattet, so daß der Abkühlvorgang der über die Gefällestrecke fließenden Metallschmelze überwacht und gegebenenfalls beeinflußt werden kann. Während die Metallschmelze über die Gefällestrecke fließt, kühlt sich diese ab, so daß alle Mischkristalle ausfallen und im integrierten oder nachgeschalteten Filter abgeschieden werden.

Durch eine Neigungsverstellung der Gefällestrecke (Anspruch 10) kann die Fließgeschwindigkeit und die Abkühlrate beeinflußt werden.

Die Erfindung ist nachfolgend anhand zweier Ausführungsbeispiele näher beschrieben. Es zeigen:
Figur 1 in schematischer Darstellungsweise eine erste Anordnung zur Regeneration einer Metallschmelze und
Figur 2 das Schema eines Schmelztauch-Beschichtungsprozesses mit kontinuierlicher Regeneration der Metallschmelze.

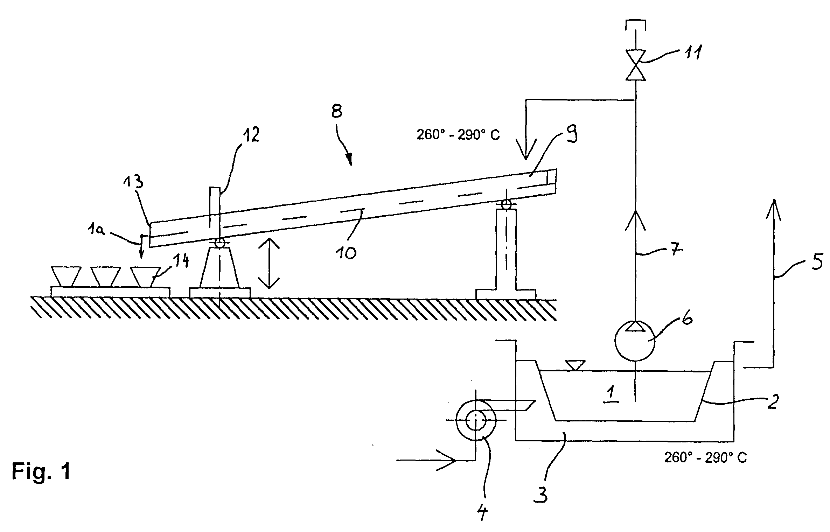

Figur 1 zeigt eine erste Anordnung zum Filtrieren einer durch Mischkristalle verunreinigten Metallschmelze, bei der es sich um eine Zinnschmelze 1 handelt.

Die Zinnschmelze 1 befindet sich im Schmelzbecken 2 eines Schmelzofens 3. Dieser wird durch einen gasbetriebenen Brenner 4 beheizt. Die Zinnschmelze 1 wird im Schmelzbecken 2, welchem die Funktion einer Heizeinheit zukommt, je nach Verunreinigungsgrad auf eine Temperatur zwischen 260°C bis 290°C gebracht. Diese Temperatur liegt oberhalb der Liquidustemperatur der Zinnschmelze 1. Aufgrund der spezifischen Eigenschaften der Zinnschmelze 1 sind bei dieser Temperatur alle Legierungsbestandteile flüssig. Das Abgas aus dem Schmelzofen 3 wird über eine Rauchgasableitung 5 entsorgt.

Durch eine Zinnpumpe 6 wird flüssige Zinnschmelze 1 aus dem Schmelzbecken 2 über eine Rohrleitung 7 der Nennweite DN 50 zu einer Kühleinheit 8 geleitet, welche durch eine Gießrinne 9 mit Gefällestrecke 10 gebildet ist. In die Rohrleitung 7 ist eine Entlüftung 11 integriert.

Die Temperatur der Zinnschmelze 1 am Eintritt der Gießrinne 9 liegt geringfügig unter der beschriebenen Temperatur von 260°C bis 290°C. Während die Zinnschmelze 1 durch die Gießrinne 9 fließt, kühlt sie auf eine Temperatur unterhalb der Liquidustemperatur, im vorliegenden Fall auf etwa 210°C bis 230°C ab, so daß Mischkristalle ausfallen. Die Fließgeschwindigkeit der Zinnschmelze 1 auf der Gefällestrecke 10 kann durch die im Winkel neigungsverstellbare Gießrinne 9 beeinflußt werden. Grundsätzlich ist darauf hinzuweisen, daß die jeweiligen Temperaturen bzw. Temperaturbereiche verfahrenstechnisch abhängig sind von der Zusammensetzung der Metallschmelze und dem Verunreinigungsgrad.

Die Mischkristalle werden durch einen Einsteckfilter 12 am Ende der Gefällestrecke 10 abgetrennt. Der Einsteckfilter 12 ist ein keramischer Schaumfilter aus Siliziumcarbid oder Aluminiumoxid.

Die Gießrinne 9 ist im Abstand von ca. 300 mm mit Thermoelementen ausgestattet, so daß die Temperatur in der Gießrinne 9 beim Durchfluß überwacht werden kann. Im Bedarfsfalle kann regelnd auf die Fließgeschwindigkeit durch eine Neigungsverstellung der Gießrinne 9 eingegriffen werden. Hierdurch wird die gewünschte Abkühlung zuverlässig bis zum Einsteckfilter 12 erreicht. Die von Mischkristallen befreite regenerierte Zinnschmelze 1a gelangt anschließend über den Auslauf 13 der Gießrinne 9 in Auffangbehälter 14, von wo aus sie dem Verzinnungsprozeß zugeleitet werden kann.

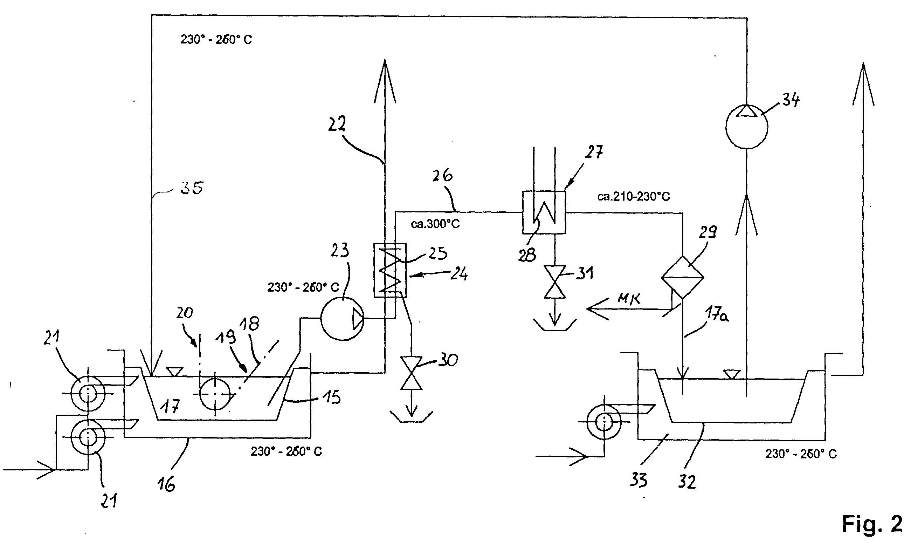

In der Figur 2 ist schematisch das Konzept der kontinuierlichen Regeneration einer im Verzinnungsprozeß verunreinigten Zinnschmelze erläutert.

Im Beschichtungsbecken 15 eines Warmhalteofens 16 einer Verzinnungslinie befinden sich üblicherweise ca. 3,5 Tonnen einer Zinnschmelze 17. Diese wird während des Beschichtungsprozesses auf einer Temperatur zwischen 230°C bis 260°C gehalten. Im Bedarfsfalle kann die Betriebstemperatur auf 280°C gesteigert werden. Dies ist allerdings eher ein Ausnahmezustand.

Ein zu verzinnendes Kupferband 18 läuft durch das Beschichtungsbecken 15. Bei einer Bandlaufgeschwindigkeit zwischen 60 m/min und 100 m/min werden so maximal 65 m² pro Minute Bandoberfläche durch die Zinnschmelze 17 geführt. Am Einlauf 19 hat das Kupferband 18 eine Oberflächentemperatur von ca. 140°C. Am Auslauf 20 ist die Temperatur des Kupferbands 18 auf die Temperatur der Zinnschmelze 17 angestiegen. Die Wärmemenge, die der Zinnschmelze 17 durch das Kupferband 18 entzogen wird, wird durch zwei geregelte Gasbrenner 21 wieder zugeführt. Über einen Kamin 22 wird das ca. 800°C heiße Abgas abgeführt.

Während das Kupferband 18 durch die Zinnschmelze 17 läuft, gehen Kupfer- und gegebenenfalls andere Legierungsbestandteile wie Zink bei zinkhaltigen Legierungen in Lösung. Durch diese chemische Veränderung verschlechtert sich die Konsistenz der Zinnschmelze 17 und ihr Benetzungsverhalten, so daß das Verzinnungsergebnis leiden würde. Dies wird durch ein kontinuierliches Filtern der Zinnschmelze 17 verhindert, wodurch ein gleichmäßiger Betriebszustand eingestellt werden kann. Hierzu wird im laufenden Beschichtungsprozeß Zinnschmelze 17 als Teilstrom aus dem Beschichtungsbecken 15 abgezogen und über eine Pumpe 23 einer Heizeinheit 24 mit Wärmetauscher 25 zugeführt. Die Heizeinheit 24 ist abgasbeheizt. Hierzu wird das heiße Abgas aus dem Warmhalteofen 16 genutzt. Die abgezweigte Zinnschmelze 17 wird über den Wärmetauscher 25 auf ca. 300°C erwärmt. Diese Temperatur liegt oberhalb der Liquidustemperatur der Zinnschmelze 17, so daß sämtliche Legierungsbestandteile in flüssiger Form vorliegen. Durch eine Rohrleitung 26 wird die heiße Zinnschmelze 17 einer Kühleinheit 27 zugeführt. Im Kühler 28 der Kühleinheit 27 wird die Zinnschmelze 17 auf ca. 210°C bis 230°C abgekühlt, bevor sie einem Filter 29 zugeleitet wird. In Abhängigkeit von der Zusammensetzung der Metallschmelze und dem Verunreinigungsgrad kann aber auch eine geringere Temperaturabsenkung, beispielsweise von ΔT=20°C auf eine Temperatur von 280 °C genügen, um die ungewünschten Mischkristallkonglomerate zur Ausfällung zu bringen. Sowohl der Wärmetauscher 25 als auch der Kühler 28 sind mit einer Einrichtung 30 bzw. 31 zur Notentleerung ausgestattet.

Bei dem Filter 29 handelt es sich um einen oxidkeramischen Schaumfilter. In diesem werden die beim Abkühlvorgang ausgefallenen Mischkristalle von der Zinnschmelze 17 getrennt. Die Mischkristalle können zusammen mit verbrauchtem Filtermaterial einer Wiederverwendung zugeführt werden (Pfeil MK).

Die gereinigte Zinnschmelze 17a fließt in das Schmelzbecken 32 eines Schmelzofens 33. Der Schmelzofen 33 wird mit der gleichen Temperatur wie der Warmhalteofen 16 betrieben, so daß die regenerierte Zinnschmelze 17a auf eine Temperatur zwischen 230°C und 260°C eingestellt wird.

Aus dem Schmelzbecken 32 wird regenerierte Zinnschmelze 17a über eine Pumpe 34 durch eine Rohrleitung 35 zurück in das Beschichtungsbecken 15 des Warmhalteofens 16 gefördert. Die Fördermengen der Pumpe 23 zum Abzug der Zinnschmelze 17 aus dem Beschichtungsbecken 15 und der Pumpe 34 zur Rückförderung der regenerierten Zinnschmelze 17a sind mengenmäßig aufeinander abgestimmt, so daß der Badspiegel im Beschichtungsbecken 15 konstant und die Qualität der Zinnschmelze 17 gleichmäßig gehalten werden kann.

Neben der zuvor beschriebenen Zinnfiltrierung kann das gleiche Verfahren in betriebsmitteltechnisch angepaßter Anordnung auch zur Reinigung und Rückgewinnung von Zinkschmelzen angewendet werden. In diesem Fall liegen die Temperaturen im Produktionsbereich bei ca. 550°C und die Liquidustemperaturen bei ca. 600°C. Möglich ist es, die flüssige Zinkschmelze im Gefälle durch Schwerkrafteinwirkung der Kühleinheit und dem Filter zuzuführen. Ähnliches gilt für zinkhaltige Zinnschmelzen (Zinkanteil maximal 15 %), die im Temperaturbereich zwischen 200°C und 400°C betrieben werden.

### Bezugszelcheneufstellung

- 1 -: Zinnschmelze 1a - regenerierte Zinnschmelze
- 2 -: Schmelzbecken
- 3 -: Schmelzofen
- 4 -: Brenner
- 5 -: Rauchgasableitung
- 6 -: Zinnpumpe
- 7 -: Rohrleitung
- 8 -: Kühleinheit
- 9 -: Gießrinne
- 10 -: Gefällestrecke
- 11 -: Entlüftung
- 12 -: Einsteckfilter
- 13 -: Auslauf
- 14 -: Auffangbehälter
- 15 -: Beschichtungsbecken
- 16 -: Warmhalteofen
- 17 -: Zinnschmelze 17a - regenerierte Zinnschmelze
- 18 -: Kupferband
- 19 -: Einlauf
- 20 -: Auslauf
- 21 -: Gasbrenner
- 22 -: Kamin
- 23 -: Pumpe
- 24 -: Heizeinheit
- 25 -: Wärmetauscher
- 26 -: Rohrleitung
- 27 -: Kühleinheit
- 28 -: Kühler
- 29 -: Filter
- 30 -: Notentleerung
- 32 -: Schmelzbecken
- 33 -: Schmelzofen
- 34 -: Pumpe
- 35 -: Rohrleitung
MK - Mischkristalle

## Patentansprüche

1. Verfahren zum Regenerieren einer durch Mischkristalle verunreinigten Metallschmelze, insbesondere einer Zinnschmelze, aus einem Schmelztauch-Beschichtungsprozeß, bei welchem die Metallschmelze zunächst über ihre Liquidustemperatur erhitzt wird und anschließend die beim Erkalten ausfallenden Mischkristalle mechanisch entfernt werden, **dadurch gekennzeichnet, daß** die Metallschmelze nach dem Erhitzen mindestens auf Liquidustemperatur über eine Kühleinheit (8, 27) geleitet und im Durchfluß durch wenigstens einen Filter (12, 29) geführt wird.

2. Verfahren nach Anspruch 1, **dadurch gekennzeichnet, daß** ein keramischer Filter (12, 29), insbesondere ein Schaumfilter auf Siliciumcarbidbasis oder ein Aluminiumoxidfilter, eingesetzt wird.

3. Verfahren nach Anspruch 1 oder 2, **dadurch gekennzeichnet, daß** Metallschmelze aus einem Beschichtungsbecken (15) entnommen und auf dem Weg zu einem Schmelzbecken (32) aufgeheizt, gekühlt und dann gefiltert wird, worauf im Schmelzbecken (32) eine Temperaturerhöhung der regenerierten Metallschmelze erfolgt und aus dem Schmelzbecken (32) Metallschmelze zum Beschichtungsbecken (15) zurückgeführt wird.

4. Verfahren nach einem der Ansprüche 1 bis 3, wobei es sich bei der Metallschmelze um eine Zinnschmelze handelt, welche mehr als 50% Zinn enthält, **dadurch gekennzeichnet, daß** die **Z**innschmelze auf dem Weg zum Filter (12, 29) zunächst auf eine Temperatur T_{H} zwischen 230°C und 350°C aufgeheizt und anschließend auf eine Temperatur T_{K} zwischen 210°C und 250°C abgekühlt wird.

5. Anordnung zur Durchführung eines Verfahrens nach einem der Ansprüche 1 bis 4, **dadurch gekennzeichnet, daß** eine Pumpe (6, 23) vorgesehen ist, welche Metallschmelze aus einem Becken (2, 15) zur Kühleinheit (8, 27) und dem dieser nachgeschalteten Filter (12, 29) fördert.

6. Anordnung nach Anspruch 5, **dadurch gekennzeichnet, daß** der Kühleinheit (8, 27) eine Heizeinheit (24) vorgeschaltet ist.

7. Anordnung nach Anspruch 6, **dadurch gekennzeichnet, daß** die Heizeinheit (24) abgasbeheizt ist.

8. Anordnung nach einem der Ansprüche 5 bis 7, **dadurch gekennzeichnet, daß** der Filter (12, 29) ein keramischer Schaumfilter aus Siliciumcarbid oder Aluminiumoxid ist.

9. Anordnung nach einem der Ansprüche 5 bis 8, **dadurch gekennzeichnet, daß** die Kühleinheit (8) durch eine Gefällestrecke (10) gebildet ist.

10. Verfahren nach Anspruch 9, **dadurch gekennzeichnet, daß** die Gefällestrecke (10) neigungsverstellbar ist.
